(19)

Europäisches
Patentamt
European
Patent Office
Office européen
des brevets

(11) **EP 3 430 911 A1**

(12) **EUROPEAN PATENT APPLICATION**
published in accordance with Art. 153(4) EPC

(43) Date of publication:
**23.01.2019 Bulletin 2019/04**

(21) Application number: **17775531.1**

(22) Date of filing: **31.03.2017**

(51) Int Cl.:
*A23L 2/00* *(2006.01)*        *A23L 2/60* *(2006.01)*
*A23L 27/00* *(2016.01)*

(86) International application number:
**PCT/JP2017/013585**

(87) International publication number:
**WO 2017/171000 (05.10.2017 Gazette 2017/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **31.03.2016 JP 2016072901**

(71) Applicant: **Suntory Holdings Limited**
**Osaka-shi, Osaka 530-8203 (JP)**

(72) Inventors:
• **NAKAJIMA, Makoto**
  **Kawasaki-shi**
  **Kanagawa 211-0067 (JP)**
• **SUZURI, Ryota**
  **Kawasaki-shi**
  **Kanagawa 211-0067 (JP)**

(74) Representative: **Mewburn Ellis LLP**
**City Tower**
**40 Basinghall Street**
**London EC2V 5DE (GB)**

(54) **CARBONATED BEVERAGE CONTAINING CARAMEL AND STEVIOL GLYCOSIDE**

(57)     An embodiment of the present invention provides a natural and low-calorie-oriented carbonated beverage having improved bubble dissipation behaviour and suppressed foaming.

Provided is a carbonated beverage satisfying the following conditions: (A) a content of a caramel is 100 to 5000 ppm; (B) a total content of RebD and/or RebM is 200 to 500 ppm; and (C) (total content of RebD and/or RebM) $\leq$ (-1/49) $\times$ (content of caramel) + 502.

EP 3 430 911 A1

**Description**

TECHNICAL FIELD

Embodiments of the present invention relate to carbonated beverages containing caramel and steviol glycoside.

BACKGROUND ART

There is an increasing demand for natural and low-calorie-oriented carbonated beverages. There is known a carbonated beverage containing a steviol glycoside as a natural sweetener (Patent Literature 1). However low-calorie carbonated beverages may suffer problems concerning bubble dissipation behaviour and foaming which are caused by a component or carbonic acid gas contained in the carbonated beverages. Such problems become more serious as the pressure of the carbonic acid gas in the beverages increases. In relation to such problems, incorporation of an anti-foaming agent has been reported as means for reducing the foaming of carbonated beverages (Patent Literature 2). However, this means is not suitable for nature-oriented carbonated beverages.

CITATION LIST

PATENT LITERATURE

   Patent Literature 1: Japanese Patent Laid-Open No. 2015-502404
   Patent Literature 2: Japanese Patent Laid-Open No. 2014-087359

SUMMARY OF THE INVENTION

TECHNICAL PROBLEM

Through research and development of natural and low-calorie-oriented carbonated beverages, the present inventors have found that bubbles once generated in a carbonated beverage containing caramel and steviol glycoside do not readily disappear (bubble dissipation behaviour is poor), and that foaming is intense in such a beverage. Further study has led the inventors to the discovery that these phenomena are associated with RebA which is a main steviol glycoside.

The present invention aims to provide a natural and low-calorie-oriented carbonated beverage having improved bubble dissipation behaviour and suppressed foaming.

SOLUTION TO THE PROBLEM

An embodiment of the present invention is a carbonated beverage satisfying the following conditions: (A) content of a caramel is 100 to 5000 ppm; (B) a total content of RebD and/or RebM is 200 to 500 ppm; and (C) (total content of RebD and/or RebM) $\leq$ (-1/49) $\times$ (content of caramel) + 502.

BRIEF DESCRIPTION OF THE DRAWING

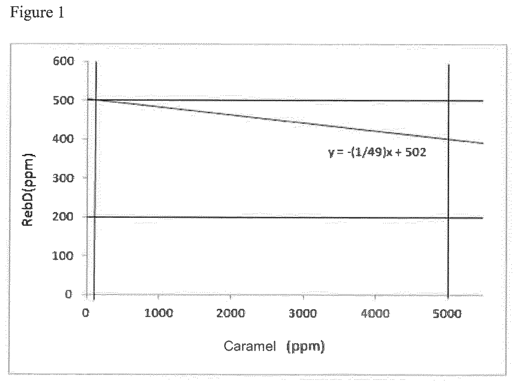

[Figure 1] Figure 1 shows the influence of the contents of caramel and RebD on the bubble dissipation behaviour of a carbonated beverage.

DESCRIPTION OF EMBODIMENTS

Hereinafter, embodiments of the present invention will be described with reference to the drawings.

A carbonated beverage embodying the present invention contains caramel and RebD and/or RebM. In the carbonated beverage, the content of the caramel is 100 to 5000 ppm, the total content of RebD and/or RebM is 200 to 500 ppm, and the following relationship is satisfied: (total content of RebD and/or RebM) $\leq$ (-1/49) $\times$ (content of caramel) + 502. The term "ppm" as used herein refers to weight/weight (w/w) ppm, unless otherwise specified.

The caramel used in embodiments of the present invention can be any known caramel. For example, caramels are classified into caramel I, caramel II, caramel III, and caramel IV according to the production method. Any of these caramels may be used in embodiments of the present invention. These caramels are defined herein according to Japanese Standards of Food Additives (1999). The caramel used in the embodiments of the present invention can be appropriately selected according to the desired colour and flavour of the carbonated beverage and in view of cost and availability. The content of the caramel in the carbonated beverage can be 100 to 5000 ppm. The method for measuring the content of the caramel is not particularly limited, and the content of the caramel can be measured, for example, according to Standard Methods of Analysis in Food Safety Regulation, Physics and Chemistry Edition (issued by Japan Food Hygiene Association in 2005) mentioned in WO 2015/015820. This method is used herein for measurement of the content of the caramel, unless otherwise specified.

The term "Reb" is used herein as an abbreviation of Rebaudioside. Reb is known as a sweet component contained in a stevia extract. The stevia extract can be obtained by extraction from stevia dry leaves, followed by purification. Stevia is an Asteraceous perennial plant native to Paraguay in South America, and its scientific name is Stevia Rebaudiana Bertoni. Stevia contains a component having sweetness several score times or more that of sucrose and, for this reason, stevia is grown and used as a source of natural sweetener. The types of Reb previously reported include various glycosides such as RebA, RebB, RebC, RebD, and RebE and further include RebM described in National Publication of International Patent Application No. 2012-504552. Among the various types of Reb, RebA is evaluated as a sweetener having a high degree of sweetness and favorable sweetness and is widely used. Examples of methods for obtaining RebA, RebD, and RebM include, but are not limited to: buying on the market; synthesis by organic chemical process or the like; and separation from or purification of a natural product. When RebA, RebD, or RebM is obtained by separation or purification, a stevia extract can be used as a starting material. For example RebA, RebD, and RebM can be obtained by purification according to a method described in National Publication of International Patent Application No. 2009-517043, a method described in US8414949, and a method described in Foods 2014, 3(1), 162-175; doi: 10.3390/foods 3010162, respectively. RebA, RebD, and RebM may be analysed by any method, for example, by a high performance liquid chromatograph (HPLC) set under the conditions described in National Publication of International Patent Application No. 2012-504552. This method is used herein for analysis of RebA, RebD, and RebM, unless otherwise specified.

In embodiments of the present invention, incorporation of RebD and/or RebM can improve caramel-associated poor bubble dissipation behaviour of the carbonated beverage, and can also suppress the foaming that may, when the carbonated beverage contains RebA, occur at the time of opening the bottle of the carbonated beverage or pouring the carbonated beverage into a container. The total content of RebD and/or RebM in the carbonated beverage may be 200 ppm or more. The total content of RebD and/or RebM in the carbonated beverage can be adjusted to 500 ppm or less to prevent the carbonated beverage from being excessively sweet. The total content of RebD and/or RebM in the carbonated beverage is more preferably 200 ppm or more and 300 ppm or less (200 to 300 ppm). The "total content of RebD and/or RebM" as described herein refers to the total content of RebD and RebM when both RebD and RebM are present, and the conjunction "or" is used to encompass a situation where either RebD or RebM is not contained. When a combination of RebD and RebM is incorporated, the mass ratio between RebD and RebM is not particularly limited. For example, the ratio of the mass of RebM to the mass of RebD may be 0.01 to 5, preferably 0.1 to 4, and more preferably 0.3 to 3.

In embodiments of the present invention, the degree of sweetness of the carbonated beverage can be adjusted to the extent that it is possible to improve the caramel-associated poor bubble dissipation behaviour of the carbonated beverage and reduce the foaming that may occur, when the carbonated beverage contains RebA, at the time of opening a bottle of the carbonated beverage or pouring the carbonated beverage into a container. The degree of sweetness of the carbonated beverage can be adjusted by incorporating any one or a combination of sweeteners, such as a combination of a natural sweetener and an artificial sweetener. In terms of increase in natural orientation, it is preferable to incorporate a larger amount of a natural sweetener. It is more preferable to adjust the degree of sweetness of the carbonated beverage by incorporating only a natural sweetener. Natural sweeteners that can be used include, but are not limited to, glucose, fructose, sucrose, and high intensity sweeteners. A high intensity sweetener is preferred to allow the carbonated beverage to be low calorie. The high intensity sweetener as described herein refers to a sweetener having higher sweetness than sucrose, and examples of the high intensity sweetener include, but are not limited to, stevia-derived sweeteners (such as the above-mentioned stevia extract, RebA, RebB, RebC, RebD, RebE, and RebM), Siraitia grosvenorii extract, and Glycyrrhiza extract.

In the present embodiments, the degree of sweetness of the carbonated beverage is adjusted on the basis of Brix in terms of sucrose. For example, the degree of sweetness of the carbonated beverage is preferably such that the Brix in terms of sucrose is 5.7 to 14.3. The Brix in terms of sucrose can be calculated herein from the content of Reb and the degree of sweetness of Reb relative to that of sucrose. For example, RebA has a degree of sweetness 300 times that of sucrose, and RebD and RebM have a degree of sweetness 285 times that of sucrose. Thus, the amount of RebA corresponding to Brix 1 in terms of sucrose can be calculated to be 33.1 ppm, and the amount of RebD and RebM corresponding to Brix 1 in terms of sucrose can be calculated to be 35.1 ppm, respectively. That is, if the degree of sweetness of the carbonated beverage is adjusted using only RebD and/or RebM so that the Brix in terms of sucrose is 5.7 to 14.3, this means that 200 to 500 ppm of RebD and/or RebM is incorporated in the beverage.

In embodiments of the present invention, the carbonated beverage is low calorie. The low-calorie carbonated beverage has a calorie content of 20 kcal/100 ml or less, and is preferably a zero-calorie carbonated beverage.

Non-limiting examples of the carbonated beverage embodying the present invention include refreshing beverages, non-alcoholic beverages and alcoholic beverages. Specific examples include, but are not limited to, sparkling beverages, Coke, Diet Coke, ginger ales, soda pops, and carbonated water having fruit juice flavour. The content of carbonic acid gas in the carbonated beverage can be specified by a gas pressure. The carbonic acid gas pressure in the carbonated beverage is 2.0 kgf/cm$^2$ or more and preferably 2.5 kgf/cm$^2$ or more at a liquid temperature of 20°C. The upper limit of the gas pressure may, if desired, be set to 5.0 kgf/cm$^2$ or less, preferably 4.0 kgf/cm$^2$ or less. In embodiments of the present invention, carbonic acid gas may be generated by fermentation in the beverage or carbonic acid gas may be injected into the beverage. The carbonic acid gas pressure is measured as follows: the beverage conditioned to 20°C is fixed in a gas internal pressure meter, the cock of the gas internal pressure meter is opened to expose the beverage to the atmosphere, and is then closed, after which the gas internal pressure meter is shaken, and a value is read when the pointer of the meter stops at a certain position. This method is used herein for measurement of the gas pressure or carbonic acid gas pressure, unless otherwise specified. The terms "carbonic acid gas pressure" and "gas pressure" are defined herein to have the same meaning and are interchangeably used.

In embodiments of the present invention the carbonated beverage can be packed in a container. The container used may be any form of container made of any material and may be, for example, a glass bottle, a can, a barrel or a PET bottle.

In embodiments of the present invention, the carbonated beverage can further contain an aroma component. Examples of the aroma component include, but are not limited to, cinnamaldehyde ($C_6H_5CH=CH-CHO$, molecular weight: 132.16). Cinnamaldehyde is an aromatic aldehyde known as an aroma component of cinnamon and is available as a flavouring agent. The content of cinnamaldehyde in the carbonated beverage is, for example but not limited to, 0.5 to 50 ppm, and can be preferably 0.5 to 32 ppm or 1.0 to 20 ppm. The content of cinnamaldehyde can be measured, for example, by a method using a gas chromatograph and a mass spectrometer. Such a method is used herein for determination of the content of cinnamaldehyde, unless otherwise specified.

In embodiments of the present invention the carbonated beverage may contain a flavour. The flavour may be any available flavour, examples of which include but are not limited to lemon flavour, lime flavour, Japanese plum flavour, strawberry flavour, apple flavour, orange flavour, grapefruit flavour, and grape flavour. The content of flavour in the carbonated beverage can be adjusted as appropriate and can be adjusted, for example, to 0.01 to 0.5 w/v%.

A beverage embodying the present invention may further contain another component usable in drinks and foods, unless the other component impairs the effect of the present invention; examples of the other component include: polyphenols such as catechins; plant extracts; caffeine; sweeteners (including saccharides such as sugar and isomerized liquid sugars and high intensity sweeteners such as aspartame, sucralose, and acesulfame K); flavouring agent; acidulants (such as citric acid, tartaric acid, malic acid, phosphoric acid, and lactic acid); colorants; fruit juices; fruit juice purees; milk; milk products; other flavours; and nutrient supplements (such as vitamins, calcium, minerals, and amino acids). These components may be added singly or in combination of a plurality of these components in the beverage.

Specific examples embodying the present invention will be described hereinafter. The embodiment is described for better understanding of the present invention and is by no means intended to limit the scope of the invention.

Carbonated beverages were prepared by incorporation of predetermined amounts of caramel IV (Sunbrown CA-4 available from San-Ei Gen F.F.I., Inc.) and RebD. For the beverages, the content of the caramel was adjusted to 100 to 5000 ppm, the content of RebD was adjusted to 200 to 500 ppm (Brix in terms of sucrose: 5.7 to 14.3), the carbonic acid gas was adjusted to 2.0 kgf/cm$^2$, and the pH was adjusted to 2.8. The flavour and bubble dissipation behaviour of the carbonated beverages were evaluated. The evaluation of the flavour of the beverages was conducted by allowing five expert panels to give scores from 1 to 5 points in increments of 0.1 points. A rating of "×" (poor flavour) was given when the average score was less than 3 points, while when the average score was 3 points or more, a rating of "○" (good flavour) was given. The evaluation of the bubble dissipation behaviour of the beverages was conducted as follows. Each of the carbonated beverages prepared as above was sealed in a 100 ml container, which was allowed to stand at 4°C for 24 hours. After that, the container was opened, and an inverted 500 ml graduated cylinder was fixed on the spout of the container. The graduated cylinder and container were reversed to pour the carbonated beverage into the graduated cylinder. The time from the moment when the rising bubbles reached the maximum height to the moment when the bubbles converged to a constant liquid level was measured as bubble disappearance time. Carbonated beverages were prepared as controls using RebA instead of RebD and evaluated in the same manner as above. A rating of "○" (improved bubble dissipation behaviour) was given when the bubble disappearance time of the carbonated beverage of interest was 90% or less of the bubble disappearance time of a carbonated beverage as a control. When the bubble disappearance time of the carbonated beverage of interest was 85% or less of the bubble disappearance time of a control carbonated beverage, a rating of "◎" was given. When the bubble disappearance time of the carbonated beverage of interest was more than 90% of the bubble disappearance time of a control carbonated beverage, a rating of "×" (unimproved bubble dissipation behaviour) was given.

Table 1

| Caramel content (ppm) | 100 | 100 | 2000 | 2000 | 2000 | 3500 | 3500 | 5000 | 5000 | 3000 | 4000 | 3000 | 4000 |
|---|---|---|---|---|---|---|---|---|---|---|---|---|---|
| RebD content (ppm) | 500 | 200 | 300 | 400 | 480 | 300 | 400 | 400 | 200 | 440 | 420 | 450 | 450 |
| Flavour | ○ | ○ | ○ | ○ | ○ | ○ | ○ | ○ | ○ | ○ | ○ | ○ | ○ |
| Bubble dissipation behaviour | ○ | ◎ | ◎ | ○ | × | ◎ | ○ | ○ | ○ | ○ | ○ | × | × |

Table 1 shows that a caramel content of 100 to 5000 ppm was appropriate in terms of flavour. When the caramel content was less than 100 ppm, the carbonated beverage did not suffer the problems concerning the bubble dissipation behaviour and foaming (no data shown herein). When the caramel content was more than 5000 ppm, the flavour of the carbonated beverage was deteriorated (no data are shown herein). The appropriate RebD content in a carbonated beverage was found to be 200 to 500 ppm. When the RebD content was 200 to 300 ppm, the problems concerning the bubble dissipation behaviour and foaming were effectively improved. When the RebD content was less than 200 ppm, the problems concerning the bubble dissipation behaviour and foaming of carbonated beverages were not able to be improved (no data are shown herein). When the RebD content was more than 500 ppm, the carbonated beverage had excessive sweetness and poor flavour (no data are shown herein). It was also observed that the higher the caramel content was, the lower was the upper limit of the RebD content effective in improving the problems concerning the bubble dissipation behaviour and foaming of carbonated beverages. This fact was completely unexpected. Given that RebD and RebM have analogous chemical structures and the same degree of sweetness, it should be understood that results similar to those described above are obtained when RebM is used instead of RebD to prepare carbonated beverages, and when both RebM and RebD are used in combination to prepare carbonated beverages.

Figure 1 is derived from the results shown in Table 1. Figure 1 shows that to improve the bubble dissipation behaviour and foaming of carbonated beverages, it is more preferable that the content of the caramel and the content of RebD and/or RebM not only satisfy the following previously described conditions:

the content of the caramel is 100 to 5000 ppm; and
the content of RebD and/or RebM is 200 to 500 ppm,

but also satisfy the following relationship:

$$\text{(total content of RebD and/or RebM)} \leq (-1/49) \times \text{(content of caramel)} + 502.$$

In particular, it was confirmed that the improving effect is enhanced when the RebD content is 200 to 300 ppm.

Tests were conducted under the same conditions as above except for incorporating predetermined amounts of RebM instead of RebD (Table 2). RebM was confirmed to improve the bubble dissipation behaviour and foaming of carbonated beverages as effectively as RebD. As is the case for the results shown in Table 1, it was confirmed that the improving effect was enhanced when the RebM content was 200 to 300 ppm.

Table 2

| Caramel content (ppm) | 100 | 2000 | 5000 | 3000 |
|---|---|---|---|---|
| RebM content (ppm) | 200 | 300 | 400 | 450 |
| Flavour | ○ | ○ | ○ | ○ |
| Bubble dissipation behaviour | ○ | ◎ | ○ | × |

It was also confirmed that incorporating predetermined amounts of RebD and RebM in combination improved the bubble dissipation behaviour and foaming of carbonated beverages as effectively as incorporating either RebD or RebM singly. In particular, it was confirmed that a mass ratio of RebM to RebD is preferably 0.3 to 3 (Table 3).

Table 3

| Caramel content (ppm) | 100 | 100 | 100 |
|---|---|---|---|
| Total amount of RebD and RebM (ppm) | 200 | 200 | 200 |
| RebD amount (ppm) | 100 | 150 | 50 |
| RebM amount (ppm) | 100 | 50 | 150 |
| Flavour | ○ | ○ | ○ |
| Bubble dissipation behaviour | ◎ | ◎ | ◎ |

**Claims**

1.  A carbonated beverage satisfying the following conditions:

    (A) content of caramel is 100 to 5000 ppm;
    (B) total content of RebD and/or RebM is 200 to 500 ppm; and
    (C) (total content of RebD and/or RebM) $\leq$ (-1/49) $\times$ (content of caramel) + 502.

2.  A carbonated beverage according to claim 1 wherein a carbonic acid gas pressure is 2.0 kgf/cm$^2$ or more at a liquid temperature of 20°C.

3.  A carbonated beverage according to claim 1 or 2 wherein the total content of RebD and/or RebM is 200 to 300 ppm.

4.  The carbonated beverage according to any one of claims 1 to 3 having a calorie content of 20 kcal/100 ml or less.

Figure 1

## INTERNATIONAL SEARCH REPORT

| International application No. |
|---|
| PCT/JP2017/013585 |

**A. CLASSIFICATION OF SUBJECT MATTER**
*A23L2/00*(2006.01)i, *A23L2/60*(2006.01)i, *A23L27/00*(2016.01)i

According to International Patent Classification (IPC) or to both national classification and IPC

**B. FIELDS SEARCHED**

Minimum documentation searched (classification system followed by classification symbols)
A23L2/00, A23L2/60, A23L27/00

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)
JSTPlus/JMEDPlus/JST7580(JDreamIII), FSTA(STN), Mintel GNPD

**C. DOCUMENTS CONSIDERED TO BE RELEVANT**

| Category* | Citation of document, with indication, where appropriate, of the relevant passages | Relevant to claim No. |
|---|---|---|
| X | WO 2014/186084 A1 (PEPSICO, INC.), 20 November 2014 (20.11.2014), claim 16; paragraphs [57] to [59]; table 1 & JP 2016-521974 A & US 2014/0342044 A1 & EP 2996494 A1 | 1-4 |
| X | WO 2014/186250 A1 (PEPSICO, INC.), 20 November 2014 (20.11.2014), claim 10; examples 2 to 3, PartA & JP 2016-518143 A & US 2014/0342043 A1 & EP 2996490 A1 | 1-4 |
| A | ZIAK L., et al., Simultaneous determination of caffeine, caramel and riboflavin in cola-type and energy drinks by synchronous fluorescence technique coupled with partial least squares, Food Chemistry, 2014, Vol.159, p.282-286 | 1-4 |

| ☒ Further documents are listed in the continuation of Box C. | ☐ See patent family annex. |
|---|---|

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 June 2017 (19.06.17) | 27 June 2017 (27.06.17) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (January 2015)

**INTERNATIONAL SEARCH REPORT**

International application No.

PCT/JP2017/013585

C (Continuation).   DOCUMENTS CONSIDERED TO BE RELEVANT

| Category* | Citation of document, with indication, where appropriate, of the relevant passages | Relevant to claim No. |
|---|---|---|
| A | The ministry of Agriculture, Forestry and Fisheries of Japan, The ministry of Agriculture, Forestry and Fisheries of Japan/Tansan Inryo no Nippon Norin Kikaku [online], 17 July 2012 (17. 07.2012), [retrieval date 16 June 2017 (16.06. 2017)], Internet:<URL:http://www.maff.go.jp/j/kokuji_tuki/kokuji/k0001015.html> | 1-4 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015502404 A
- JP 2014087359 A
- WO 2015015820 A
- WO 2012504552 A
- WO 2009517043 A
- US 8414949 B

**Non-patent literature cited in the description**

- Standard Methods of Analysis in Food Safety Regulation. Physics and Chemistry Edition. Japan Food Hygiene Association, 2005
- *Foods,* 2014, vol. 3 (1), 162-175